# EUROPÄISCHE PATENTANMELDUNG

(11) **EP 1 176 487 A1**
(43) Veröffentlichungstag der Anmeldung: **30.01.2002**
(21) Anmeldenummer: 00116088.6
(22) Anmeldetag: 27.07.2000
(51) Int. Cl.: G05D 1/02

(54) **Autonom navigierendes Robotersystem**

(71) Anmelder: GMD - FORSCHUNGSZENTRUM INFORMATIONSTECHNIK GMBH, D-53754 Sankt Augustin (DE)
(72) Erfinder: Kolesnik, Marina, 53639 Königswinter (DE)
(74) Vertreter: Hilleringmann, Jochen, Dipl.-Ing.

(57) **Zusammenfassung**

Bei dem autonom navigierendem Robotersystem erfolgt die Orientierung anhand des von einer Kamera (20) aufgenommenen aktuellen Laserprojektions-Linienmusters (44,48) und unter Berücksichtigung von vorherigen Untersuchungen des Verlaufs und der Anordnung von reflektierten Linienmustern (44,48) die bei Projektion dieser Linienmuster mittels eines Laserprojektors (18) in unterschiedlichen, jeweils bekannten Richtungen in die Umgebung gewonnen wurden.

## Beschreibung

Die Erfindung betrifft ein autonom navigierendes Robotersystem und insbesondere ein Robotersystem, das die relative Orientierung des Roboters in seiner Umgebung auf effiziente Weise ermöglicht.

Autonom navigierende Robotersysteme benötigen in einer Umgebung mit geometrisch klassifizierten Objekten eine Orientierungshilfe, um sich in diesen Umgebungen bewegen zu können. Diese Orientierungshilfe erfolgt beispielsweise durch Landmarken, d.h. natürliche oder künstliche Orientierungspunkten, die das Robotersystem mittels einer geeigneten Detektionsvorrichtung erkennt. Die bisher bekannten Detektionsvorrichtungen bedürfen der Kalibrierung und erfordern zumeist auch die Messung der Distanz des Roboters zur Landmarke. Alternative bekannte Robotersysteme nutzen zur Orientierung in ihrer Umgebung die Mustererkennung (der Landmarken) in Kamerabildern bzw. orientieren sich aufgrund einer dreidimensionalen Rekonstruktion der Umgebung. All diese Verfahren sind sowohl im Hinblick auf die benötigte Hardware als auch auf die Software recht aufwendig.

Der Erfindung liegt die Aufgabe zu Grunde, ein autonom navigierendes Robotersystem zu schaffen, dessen Orientierung in seiner Umgebung auf vereinfachte Art und Weise erfolgt.

Zur Lösung dieser Aufgabe wird mit der Erfindung ein autonom navigierendes Robotersystem vorgeschlagen, das versehen ist mit
- einem Fahrgestell, das eine Antriebsvorrichtung zum Manövrieren des Fahrgestells in einer Umgebung aufweist,
- einer auf dem Fahrgestell angeordneten Vorrichtung zur Erzeugung elektromagnetischer Strahlung und zur gerichteten Aussendung dieser Strahlung in die Umgebung,
- wobei die elektromagnetische Strahlung in Form mindestens zweier Balken ausgesendet wird, die unter einem Winkel ungleich null Grad zueinander verlaufen,
- einer auf dem Fahrgestell angeordneten Vorrichtung zur Erfassung des aus der Umgebung reflektierten Musters der elektromagnetischen Strahlung,
- wobei die Erfassungsvorrichtung versetzt zur Erzeugungs- und Aussendevorrichtung angeordnet ist, und
- einer Auswerteeinheit zur Auswertung des Verlaufs und der Anordnung der Balken des von der Erfassungsvorrichtung erfassten Balkenmusters,
- wobei die Auswerteeinheit unter Berücksichtigung von vorherigen Untersuchungen des Verlaufs und der Anordnung von bei Aussendung elektromagnetischer Strahlung in Form der mindestens zwei winklig zueinander verlaufenden Balken in unterschiedlichen bekannten Richtungen in die Umgebung aus dieser reflektierten Balkenmustern die dem augenblicklich erfassten Balkenmuster entsprechende Ist-Ausrichtung des Fahrgestells in der Umgebung ermittelt und die Antriebsvorrichtung des Fahrgestells zur Erzielung einer gewünschten Soll-Ausrichtung ansteuert.

Zur Orientierung wird bei dem erfindungsgemäßem Robotersystem ein Linien- oder Balkenmuster in die Umgebung projiziert, das aus mindestens zwei unter einem Winkel von ungleich 0° zueinander verlaufenden Balken oder Linien besteht. Ein derartiges Balkenmuster aus elektromagnetischer Strahlung, insbesondere Laserstrahlung und vorzugsweise sichtbarem Licht wird von der Erzeugungsvorrichtung, bei der es sich vorzugsweise um einen Projektor handelt, in die Umgebung ausgesendet. Das von Objekten in der Umgebung reflektierte Projektionsmuster wird von einer Erfassungsvorrichtung, bei der es sich insbesondere um eine Kamera handelt, aufgenommen. Das erfasste Bild des reflektierten Projektionsmusters wird anschließend in einer Auswerteeinheit ausgewertet. Die Orientierung bzw. Ausrichtung erfolgt erfindungsgemäß anhand des von der Kamera aufgenommenen aktuellen Linien- bzw. Balkenreflektionsmusters und unter Berücksichtigung von vorherigen Untersuchungen des Verlaufs und der Anordnung von reflektierten Linien- oder Balkenmustern, die zuvor bei der Linien- bzw. Balkenmusterprojektion in unterschiedlichen, jeweils bekannten Orientierungen des Roboters in der Umgebung gewonnen worden sind. Erfindungsgemäß erfolgt also die Orientierung anhand der Untersuchung des Verlaufs (Verzerrung) der einzelnen Balken bzw. Linien des Reflektionsmusters.

Bei dem erfindungsgemäßem Robotersystem wird die Orientierung des Roboters nicht anhand einer Mustererkennung ermittelt. Vielmehr wird der Verlauf der einzelnen Balken bzw. Linien des reflektierten Musters untersucht. Diese Untersuchung erfolgt insbesondere anhand der Bestimmung von Maximal- und Minimalwerten, also ähnlich einer mathematischen Funktionsverlaufsuntersuchung. Mit anderen Worten wird also die Verzerrung oder insbesondere die Krümmung und die Richtung der Krümmung der einzelnen Balken bzw. Linien untersucht, um daraus anhand der Form der Objekte der Umgebung, die ebenfalls bekannt sein müssen, die Ausrichtung des Roboters in der Umgebung zu ermitteln.

Bei dem Projektionsmuster handelt es sich zweckmäßigerweise um ein Kreuz aus zwei sich rechtwinklig in ihren Mittelpunkten kreuzenden Linien.

Wird das erfindungsgemäße autonom navigierende Robotersystem beispielsweise in einem Rohrsystem aus im Querschnitt im wesentlichen runden, insbesondere im wesentlichen kreisrunden Rohren eingesetzt, die sich kreuzen, verzweigen, gekrümmt sind und/oder sich von mindestens einem quer zu ihren Verläufen gerichteten Inspektionsschacht aus erstrecken, so kann anhand der Krümmung der gegen die Innenwand der Rohre projizierten und von diesen reflektierten Balken- oder Linienmusters detektiert werden, unter welchem Winkel die aktuelle Fahrtrichtung zur Längsachse des Rohrstücks läuft, in dem sich der Roboter gerade befindet. Mit dem erfindungsgemäßem System ist es also möglich, das Rohrsystem stets entlang der Längsachsen seiner Rohrstücke mit dem Roboter zu durchfahren.

Der Vorteil des erfindungsgemäßem Robotersystems ist darin zu sehen, dass die erfindungsgemäße Orientierungstechnik keine Distanzmessungen und keine Kamerakalibrierung bzw. keinerlei Kalibrierung des das reflektierte Muster erfassenden Erfassungsvorrichtung benötigt. Die erfindungsgemäß vorgesehene Orientierungstechnik basiert auf der reinen Feststellung der aktuellen Fahrtrichtung des Robotersystems innerhalb der Umgebung. Damit ist diese Orientierungstechnik in regulär strukturierten Umgebungen sehr effizient und zuverlässig einsetzbar.

Die Erfindung wird nachfolgend anhand der Zeichnungen näher erläutert.

Im einzelnen zeigen:
- Fig. 1: schematisch und in Seitendarstellung ein Ausführungsbeispiel für ein autonom navigierendes Fahrgestell eines Robotersystems zur Inspektion von Abwasserkanalsystemen,
- Fig. 2: eine Vorderansicht des in Seitenansicht dargestellten Fahrgestells gemäß Fig. 1 und
- Fign. 3 bis 6: Beispiele für mögliche Ausrichtungen des Fahrgestells und für die sich bei diesen Ausrichtungen jeweils ergebenden gegen die Rohrinnenwand projizierten und von dieser reflektierten Linienmusters.

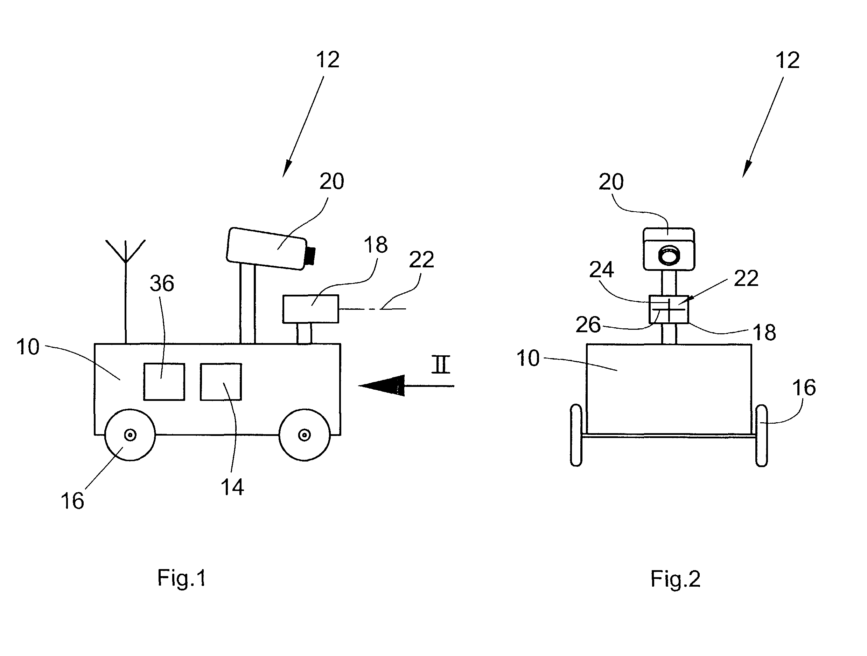

Fig. 1 zeigt ganz allgemein ein Fahrgestell 10 eines Roboters 12. Das Fahrgestell 10 ist mit einer bei 14 angedeuteten Antriebsvorrichtung versehen, über die beispielsweise die Räder 16 des Fahrgestells 10 angetrieben werden. Auf dem Fahrgestell 10 befindet sich eine Vorrichtung zur Erzeugung elektromagnetischer Strahlung in Form eines Laserprojektors 18 sowie eine Vorrichtung zur Erfassung eines aus der Umgebung reflektierten Musters elektromagnetischer Strahlung in Form einer Kamera 20. Die Kamera 20 ist unter einem vom Laserprojektor 18 verschiedenen Winkel in die Umgebung gerichtet und nimmt das von dem Laserprojektor 18 in die Umgebung projizierte und von Objekten der Umgebung reflektierte Projektionslichtmuster auf. Wie anhand der Vorderansicht des Roboters 12 gemäß Fig. 2 zu erkennen ist, projiziert der Laserprojektor 18 ein Linienmuster 22, das aus zwei sich rechtwinklig kreuzenden Linien 24,26 besteht. Von diesen beiden Linien verläuft die Linie 24, bezogen auf das Fahrgestell 10 rechtwinklig zur den Achsen der Räder 16, während die Linie 26 parallel zur diesen Achsen verläuft.

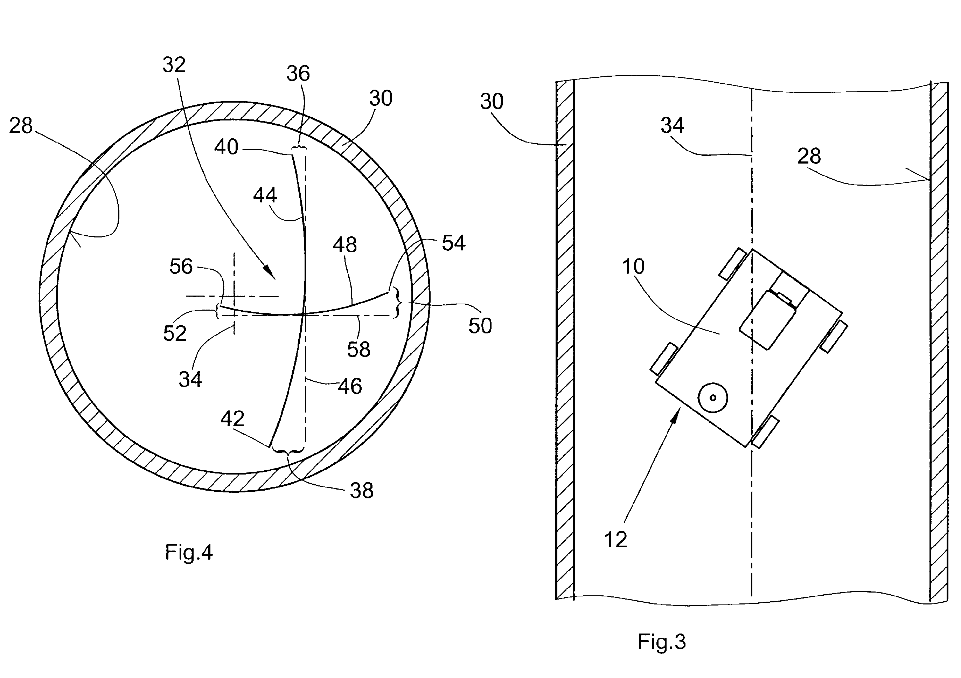

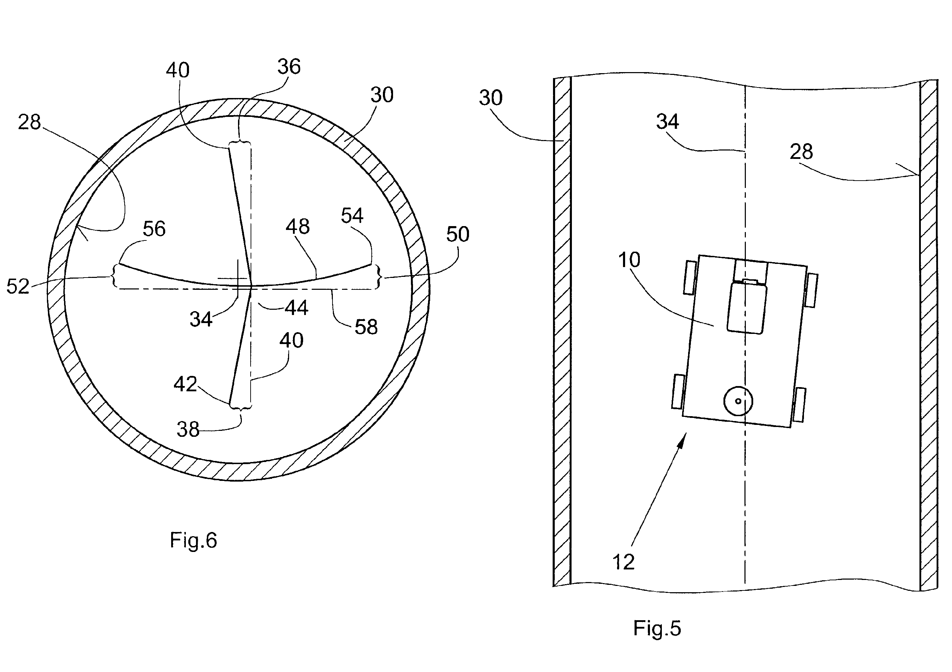

Beispiele für die an der Innenwand 28 eines im Querschnitt im wesentlichen runden Rohres 30 reflektierten Linienmuster 32 finden sich in den Fign. 4 und 6. Die dazu korrespondierende Ausrichtung des Roboters 12 relativ zur Längsachse 34 ist in den Fign. 3 und 5 wiedergegeben

Betrachtet man beispielsweise Fig. 4, so wird erkennbar, wie man durch Untersuchung und Analyse des reflektierten Linienmusters 32 in einer Auswerteeinheit 36 des Roboters 12 dessen gegenwärtige Orientierung ermitteln kann. Zu diesem Zweck werden die Abweichungen 36 und 38 der Endpunkte 40 und 42 der reflektierten Linie 44 von einer parallel zur Rohrlängsachse 34 verlaufenden Vertikalebene 46 ermittelt. In gleicher Weise wird bezüglich der reflektierten Linie 48 verfahren, in dem die Abweichungen 50, 52 an den Enden 54,56 dieser reflektierten Linie 48 zu einer Horizontalebene 58 ermittelt werden. Anhand all dieser Abweichungen kann dann auf die Krümmung und insbesondere auf den Verlauf der Krümmung der reflektierten Linien 44 und 48 geschlossen werden. Das wiederum gibt Aufschluss über die gegenwärtige Orientierung des Roboters 12. Ganz allgemein kann diesbezüglich gesagt werden, dass die Krümmung der reflektierten Linie 44 um so stärker ist, je größer der Winkel der augenblicklichen Fahrtrichtung des Roboters 12 mit der Rohrlängsachse 34 ist. Dies sieht man auch anhand eines Vergleichs der Fign. 4 und 6. Im Beispiel der Fig. 7 bewegt sich der Roboter 12 lediglich noch unter einem recht kleinen Winkel zur Rohrlängsachse 34 (s. auch den Vergleich der Fign. 3 und 5).

## Patentansprüche

1. Autonom navigierendes Robotersystem mit
- einem Fahrgestell (10), das eine Antriebsvorrichtung (14) zum Manövrieren des Fahrgestells (10) in einer Umgebung aufweist,
- einer auf dem Fahrgestell (10) angeordneten Vorrichtung (18) zur Erzeugung elektromagnetischer Strahlung und zur gerichteten Aussendung dieser Strahlung in die Umgebung,
- wobei die elektromagnetische Strahlung in Form mindestens zweier Balken (44,48) ausgesendet wird, die unter einem Winkel ungleich null Grad zueinander verlaufen,
- einer auf dem Fahrgestell (10) angeordneten Vorrichtung (20) zur Erfassung des aus der Umgebung reflektierten Musters der elektromagnetischen Strahlung,
- wobei die Erfassungsvorrichtung (20) versetzt zur Erzeugungs- und Aussendevorrichtung (18) angeordnet ist, und
- einer Auswerteeinheit (36) zur Auswertung des Verlaufs und der Anordnung der Balken (44,48) des von der Erfassungsvorrichtung (20) erfassten Balkenmusters (32),
- wobei die Auswerteeinheit (36) unter Berücksichtigung von vorherigen Untersuchungen des Verlaufs und der Anordnung von bei Aussendung elektromagnetischer Strahlung in Form der mindestens zwei winklig zueinander verlaufenden Balken (44,48) in unterschiedlichen bekannten Richtungen in die Umgebung aus dieser reflektierten Balkenmustern (32) die dem augenblicklich erfassten Balkenmuster (32) entsprechende Ist-Ausrichtung des Fahrgestells (10) in der Umgebung ermittelt und die Antriebsvorrichtung (14) des Fahrgestells (10) zur Erzielung einer gewünschten Soll-Ausrichtung ansteuert.

2. Autonom navigierendes Robotersystem nach Anspruch 1, **dadurch gekennzeichnet, dass** die Auswerteeinheit (36) die Ist-Ausrichtung des Fahrgestells (10) anhand der Verzerrung der Balken (44,48) des erfassten Balkenmusters (32) ermittelt.

3. Autonom navigierendes Robotersystem nach Anspruch 1, **dadurch gekennzeichnet, dass** die Auswerteeinheit (369 die Ist-Ausrichtung des Fahrgestells (10) anhand der Krümmung und/oder der Richtung der Krümmung der Balken (44,48) des erfassten Balkenmusters (32) ermittelt.

4. Autonom navigierendes Robotersystem nach einem der Ansprüche 1 bis 3, **dadurch gekennzeichnet, dass** die Erzeugungs- und Aussendevorrichtung (18) die elektromagnetische Strahlung in Form zweier sich rechtwinklig in ihren Mittelpunkten kreuzender Linien (44,48) aussendet.

5. Autonom navigierendes Robotersystem nach einem der Ansprüche 1 bis 4, **dadurch gekennzeichnet, dass** die elektromagnetische Strahlung sichtbares Licht ist.

6. Autonom navigierendes Robotersystem nach einem der Ansprüche 1 bis 5, **dadurch gekennzeichnet, dass** die Erzeugungs- und Aussendevorrichtung (18) eine Laserquelle aufweist.

7. Autonom navigierendes Robotersystem nach Anspruch 3 und 4 oder einem der vorherigen Ansprüche, soweit auf Anspruch 3 und 4 rückbezogen, **dadurch gekennzeichnet, dass** die Auswerteeinheit (36) die Ist-Ausrichtung des Fahrgestells (10) anhand des quer zum Verlauf eines Balkens (44,48) des erfassten Balkenmusters (32) gerichteten Abstandes eines oder mehrerer Endpunkte (40,42,54,56) jedes Balkens (44,48) oder eines oder mehrerer Endpunkte (40,42,54,56) zu einem dazwischenliegenden Punkt jedes Balkens (44,48) ermittelt.

8. Autonom navigierendes Robotersystem nach Anspruch 7, **dadurch gekennzeichnet, dass** die Auswerteeinheit (36) die Ist-Ausrichtung des Fahrgestells (10) anhand einer Untersuchung der Lage und/oder Größe der Maxima und Minima jedes Balkens (44,48) des erfassten Balkenmusters (32) ermittelt.

9. Autonom navigierendes Robotersystem nach einem der Ansprüche 1 bis 8, **dadurch gekennzeichnet, dass** die Umgebung regulär strukturiert ist und/oder geometrisch klassifizierbare Objekte aufweist.

10. Autonom navigierendes Robotersystem nach Anspruch 9, **dadurch gekennzeichnet, dass** die Umgebung ein Rohrsystem aus im Querschnitt runden, insbesondere im wesentlichen kreisrunden Rohren (30) ist, die sich kreuzen, verzweigen, gekrümmt sind und/oder sich von mindestens einem quer zu ihren Verläufen gerichteten Inspektionsschacht erstrecken.

11. Autonom navigierendes Robotersystem nach Anspruch 10, **dadurch gekennzeichnet, dass** das Fahrgestell (10) in der Soll-Ausrichtung in Längsrichtung eines Rohres (30) weist.
